# EUROPÄISCHE PATENTSCHRIFT

(11) **EP 3 272 560 B1**
(45) Veröffentlichungstag und Bekanntmachung des Hinweises auf die Patenterteilung: **06.02.2019**
(21) Anmeldenummer: 17182025.1
(22) Anmeldetag: 19.07.2017
(51) Int. Cl.: B60C 27/08, B60C 27/02

(54) **REIFENKETTE MIT 45°-KETTENSTRANG**
TIRE CHAIN WITH 45 ° CHAIN STRAND
CHAÎNE POUR PNEU AYANT UN BRIN DE CHAÎNE À 45°

(30) Priorität: 19.07.2016 DE 202016103916 U; 21.09.2016 DE 102016218168
(43) Veröffentlichungstag der Anmeldung: 24.01.2018
(73) Patentinhaber: RUD Ketten Rieger & Dietz GmbH u. Co. KG, 73432 Aalen (DE)
(72) Erfinder: Grimm, Anton, 73479 Ellwangen (DE); Rieger, Johannes, 73447 Oberkochen (DE)
(74) Vertreter: Grünecker Patent- und Rechtsanwälte PartG mbB

(56) Entgegenhaltungen:
- EP-A1- 1 327 537
- EP-A1- 3 235 665

## Beschreibung

Die Erfindung betrifft eine Reifenkette für einen Fahrzeugreifen, mit wenigstens einem Kettenstrang aus wenigstens zwei ineinandergefügten, ebenen Kettengliedern, die jeweils eine Kettengliedebene aufspannen, wobei die Kettengliedebenen unmittelbar aufeinanderfolgender Kettenglieder des Kettenstranges bei auf den Fahrzeugreifen montierter Reifenkette X- bzw. schragenkreuzförmig zu einer Lauffläche des Fahrzeugreifens ausgerichtet sind, wobei unmittelbar aufeinanderfolgende Kettenglieder des Kettenstranges jeweils mit wenigstens einem Gleitschutzelement versehen sind.

Eine derartige Reifenkette ist in der DE 20 2016 101 308 beschrieben, auf die hiermit vollumfänglich Bezug genommen wird.

Aus der unter Artikel 54(3) EPÜ fallenden Druckschrift EP 3 235 665 A1 ist eine Gleitschutzkette bekannt, bei der aufeinanderfolgende Kettenglieder mit Gleitschutzelementen versehen sind. Aus der EP 1 327 537 A1 ist eine Gleitschutzkette bekannt, bei der kreuzförmig angeordnete Kettenglieder jeweils mit einer Abflachung versehen sind.

Die vorliegende Erfindung setzt sich zum Ziel, die Traktionseigenschaften einer solchen Reifenkette zu verbessern.

Gelöst wird diese Aufgabe für die eingangs genannte Reifenkette dadurch, dass das wenigstens eine Gleitschutzelement mit beiden Schenkeln eines Kettenglieds verbunden ist.

Im Gegensatz zu herkömmlichen Reifenketten, die im montierten Zustand auf der Lauffläche stehende und parallel zur Lauffläche ausgerichtete liegende Kettenglieder aufweist, deren Kettengliedebenen abwechselnd parallel und senkrecht zur Lauffläche verlaufen, erlaubt die X-bzw. schragenkreuzförmige Anordnung der Kettenglieder, jedes Kettenglied des Kettenstranges mit einem Gleitschutzelement zu versehen. Bei herkömmlichen Ketten werden nur die liegenden Kettenglieder, also nur jedes zweite Kettenglied mit einem Gleitschutzelement versehen. Die erfindungsgemäße Anbringung eines Gleitschutzelements an jedem Kettenglied der gedrehten Laufnetzkonfiguration führt zu einem größeren Verschleißvolumen der Reifenkette, weil insgesamt mehr Gleitschutzelemente zur Verfügung stehen. Gleichzeitig ergeben sich bessere Fahreigenschaften, da die Gleitschutzelemente dichter, gleichmäßiger und flexibler über die Lauffläche verteilt sind. Durch die Verbindung des Gleitschutzelements mit beiden Schenkeln kann es gut stabilisiert werden.

Die erfindungsgemäße Lösung kann durch die folgenden jeweils für sich vorteilhaften und beliebig miteinander kombinierbaren Weiterbildungen nochmals verbessert werden.

Wie in der DE 20 2016 101 308 beschrieben ist, kann in bevorzugt jedes Ende des Kettenstranges ein in sich verdrehtes Kettenglied eingehängt sein, dessen dem Kettenstrang zugewandter eine Abschnitt gegenüber dem anderen gegenüberliegenden, vom Kettenstrang abgewandten Abschnitt verdreht ist. Die Verdrehung beträgt zwischen etwa 35° und etwa 55°, bevorzugt etwa 45°.

In einer weiteren vorteilhaften Ausgestaltung kann sich das Gleitschutzelement bei auf dem Fahrzeugreifen montierter Reifenkette auf der Lauffläche abstützen, so dass die Neigung des jeweiligen Kettengliedes zur Lauffläche und die X-förmige Anordnung der Kettenglieder stabilisiert werden. Eine großflächige und damit verschleißmindernde Auflage des Kettenstranges auf der Lauffläche ergibt sich, wenn sich auf der Lauffläche sowohl die Kettenglieder als auch die Gleitschutzelemente abstützen.

Um die Herstellkosten zu senken, sind die Gleitschutzelemente unmittelbar aufeinanderfolgender Kettenglieder bevorzugt identisch ausgestaltet.

Der Kettenstrang ist bevorzugt aus Rundstahl- und/oder Profilstahlkettengliedern zusammengesetzt, die an ihren in einer Längsrichtung des Kettenstranges gelegenen Enden gebogene Buge aufweisen, die miteinander durch zwei parallele Schenkel verbunden sind. Die beiden Buge eines Kettengliedes sind bei dieser Ausgestaltung durch zwei parallele, voneinander beabstandete Schenkel miteinander verbunden, die sich in Längsrichtung des Kettenstranges erstrecken.

Jedes der Kettenglieder kann in seinem zwischen den beiden benachbarten Kettengliedern liegenden Bereich mit dem Gleitschutzelement versehen sein.

Gemäß einer weiteren vorteilhaften Ausgestaltung können die Gleitschutzelemente eine dem jeweiligen Kettenglied zugewandte Basis aufweisen, die an dem jeweiligen Kettenglied, insbesondere den beiden Schenkeln des jeweiligen Kettenglieds, anliegt und/oder mit diesem stoffschlüssig, beispielsweise durch Verschweißen, verbunden ist. Die Basis erlaubt eine exakte Ausrichtung der Gleitschutzelemente während der Montage.

Die Gleitschutzelemente können ferner auf ihrer von der Lauffläche des Fahrzeugreifens weg weisenden Seite mit einem bevorzugt geraden Traktionsabschnitt versehen sein, der in einem Winkel zwischen etwa 35° und etwa 55°, bevorzugt um etwa 45° zur Basis verläuft. Der Traktionsabschnitt kann insbesondere bei montierter Reifenkette in etwa parallel zur Lauffläche des Fahrzeugreifens verlaufen. Der Traktionsabschnitt gräbt sich beim Abrollen des Fahrzeugreifens in den Untergrund ein. Er weist bevorzugt wenigstens eine gerade Traktionskante auf. Die Traktionskante verläuft bevorzugt quer oder zumindest in einem stumpfen Winkel zur Abrollrichtung des Reifens, um die Traktionswirkung auf härterem Untergrund wie Eis zu erhöhen. Anstelle eines geraden Traktionsabschnittes kann auch ein konkaver oder konvexer oder gewellter wellter Traktionsabschnitt eingesetzt werden. Der Traktionsabschnitt bzw. die Traktionskante liegt beim Abrollen bevorzugt gerade auf dem Untergrund des Reifens auf.

Bevorzugt ragen die Gleitschutzelemente bei montierter Reifenkette zumindest auf der von der Lauffläche abgewandten Seite nicht über die Kettenglieder hinaus. Die Höhe der auf der Lauffläche aufliegenden Reifenkette wird bevorzugt durch die Kettenglieder bestimmt. So kann die Reifenkette auch in Reifenkästen montiert werden, die nur wenig Raum bieten. Wenn das Gleitschutzelement symmetrisch ausgebildet ist, kann die Reifenkette bei Verschleiß einfach gewendet werden. Falls ausreichend Raum im Reifenkasten vorhanden ist, können die Gleitschutzelemente natürlich auch die Kettenglieder überragen.

Gemäß einer weiteren bevorzugten Ausgestaltung weist das Gleitschutzelement auf der von der Lauffläche abgewandten Seite des jeweiligen Kettenglieds eine Polygonform, insbesondere eine Dreiecksform auf. Um den Rollwiderstand weiter zu erhöhen, wird die Polygonform von einem plattenförmigen Abschnitt des Gleitschutzelements gebildet. Die Ecken des Polygons können abgerundet sein, um beispielsweise bei einer Montage der Reifenkette die Verletzungsgefahr und beim Rollen auf einer Asphaltstraße deren Beschädigung zu minimieren.

Bei Verwendung einer Dreiecksform ist eine gleichschenklige und insbesondere symmetrische Ausgestaltung von Vorteil, so dass das Gleitschutzelement einfacher montiert werden kann. Die beiden gleichlangen Schenkel verlaufen dabei bevorzugt weg vom Kettenglied. Die Basis des Dreiecks liegt bevorzugt auf den Schenkeln des jeweiligen Kettengliedes auf bzw. ist mit diesen zusammengefügt.

Das Gleitschutzelement kann, um die Montage zu vereinfachen, wenigstens eine Aufnahme aufweisen, in die wenigstens ein Schenkel des Kettenglieds eingesetzt ist. Durch die Aufnahme lässt sich das Gleitschutzelement vor der Montage exakt auf dem jeweiligen Kettenglied zentrieren. Die Aufnahme kann sich senkrecht zur Kettengliedebene oder parallel zur Kettengliedebene öffnen.

Das Gleitschutzelement kann mehrteilig aufgebaut sein, wobei die Teile bevorzugt stoffschlüssig miteinander verbunden sind. Ist eine Aufnahme vorhanden, insbesondere eine sich parallel zur Kettengliedebene öffnende Aufnahme, so kann gemäß einer weiteren vorteilhaften Ausgestaltung die Aufnahme von zwei zusammengefügten Teilen des Gleitschutzelements gebildet sein. Alternativ oder zusätzlich kann die Aufnahme auch durch einen plastisch verformten Abschnitt des Gleitschutzelements gebildet sein.

Das Gleitschutzelement kann ferner mit wenigstens einem Abschnitt durch das Kettenglied hindurch reichen. Dies erhöht die Fläche, die für eine stoffschlüssige Verbindung zwischen dem Kettenglied und dem Gleitschutzelement zur Verfügung steht, und führt zu einer festen Verbindung zwischen Kettenglied und Gleitschutzelement.

Bevorzugt umgreift das Gleitschutzelement das Kettenglied auf der der Lauffläche zugewandten Seite, beispielsweise unter Bildung der Aufnahme.

Das Gleitschutzelement kann auf der der Lauffläche zugewandten Seite des Kettenglieds zur Lauffläche hin überstehen. Der überstehende Bereich kann sich zwischen den beiden Schenkeln hindurch erstrecken. Auch diese Maßnahme führt zu einer festeren Verbindung zwischen Kettenglied und Gleitschutzelement. Mit dem überstehenden Bereich kann sich das Gleitschutzelement zumindest bei Belastung, beispielsweise im Bereich der Reifenaufstandsfläche, am Reifen abstützen und so die Belastung des Kettenstranges verringern. Das Gleitschutzelement kann auf den beiden Seiten des Kettengliedes gleich ausgestaltet sein, so dass die Reifenkette bzw. der Kettenstrang beidseitig verwendet werden kann.

Auf der zur Lauffläche hin gerichteten Seite des Kettenglieds kann das Gleitschutzelement polygonal, insbesondere dreiecksförmig ausgestaltet sein.

Gemäß einer weiteren vorteilhaften Ausgestaltung kann das Gleitschutzelement auf der zur Lauffläche hin gerichteten Seite des Kettenglieds plastisch verformt sein und insbesondere um wenigstens einen Schenkel des Kettenglieds gelegt bzw. gebogen sein.

Das Gleitschutzelement kann zumindest bereichsweise beispielsweise aus Blechmaterial ausgestanzt, ausgeschnitten und/oder gesenkgeschmiedet sein, so dass eine große Anzahl von Gleitschutzelementen kostengünstig hergestellt werden können.

Um die Traktion weiter zu erhöhen, kann das Gleitschutzelement auf seiner von der Lauffläche abgewandten Seite, insbesondere am Traktionsabschnitt, mit wenigstens einem Stollen versehen sein. Der Stollen steht bevorzugt in Richtung weg von der Lauffläche ab.

Um ein besonders einfach aufgebautes Gleitschutzelement zu erhalten, kann dieses stabförmig sein. Eine Längserstreckung der Stabform kann sich quer zu den beiden Schenkeln eines Kettengliedes erstrecken und mit beiden Schenkeln verbunden sein. Das stabförmige Gleitschutzelement kann auf den Schenkeln eines Kettengliedes liegend angeordnet und beispielsweise durch Schweißstellen stoffschlüssig mit den Schenkeln verbunden sein.

Ein stabförmiges Gleitschutzelement kann an seinen Enden bündig mit den Schenkeln eines Kettengliedes abschließen oder über diese hinausragen.

Bevorzugt ragt ein Ende des Stabes seitlich über das Kettenglied hinaus und bildet dadurch einen Stollen. Der Stollen kann sich von der der Lauffläche abgewandten Seite des Kettengliedes von diesem wegerstrecken. Weist das Gleitschutzelement einen solchen Stollen auf, so besitzt es insgesamt die Form eines gebogenen oder abgewinkelten Stabes. Dabei kann der die beiden Schenkel miteinander verbindende Teil des Stabs geradlinig sein. Der abgewinkelte Teil, der den Stollen bildet, kann sich von einem der Schenkel des Kettengliedes weg erstrecken.

Das Gleitschutzelement kann also im Bereich eines Knicks bzw. einer Biegung an einem der Kettenglieder anliegen und mit diesem verbunden sein. Bevorzugt weist das stabförmige Gleitschutzelement einen runden Querschnitt auf. Jedoch sind auch andere geeignete Querschnitte, beispielsweise polygonartige oder halbrunde Querschnitte möglich. Ebenfalls bevorzugt weist das stabförmige Gleitschutzelement im Querschnitt einen Durchmesser auf, welcher in etwa dem Durchmesser eines Schenkels des Kettengliedes entspricht.

Im Folgenden ist die Erfindung anhand von beispielhaften Ausführungsformen mit Bezug auf die Zeichnungen näher erläutert. Die bei den einzelnen Ausführungsformen unterschiedlichen Merkmale können nach Maßgabe der obigen Ausführungen beliebig miteinander kombiniert werden. So kann beispielsweise bei einer Ausführungsform auf ein bestimmtes Merkmal verzichtet werden, wenn es auf dessen technischen Effekt im Rahmen einer bestimmten Anwendung nicht ankommen sollte. Umgekehrt kann ein Merkmal eines anderen Ausführungsbeispiels bei einem Ausführungsbeispiel übernommen werden, wenn es auf den technischen Effekt dieses Merkmals des anderen Ausführungsbeispiels ankommen sollte.

Es zeigen:
- Fig. 1: eine schematische Perspektivdarstellung eines ersten Ausführungsbeispiels eines Kettenstranges mit Gleitschutzelementen für die erfindungsgemäße Reifenkette;
- Fig. 2: eine schematische Perspektivdarstellung eines zweiten Ausführungsbeispiels eines Kettenstranges mit Gleitschutzelementen für die erfindungsgemäße Reifenkette;
- Fig. 3: eine schematische Draufsicht auf ein weiteres Gleitschutzelement;
- Fig. 4: eine schematische Perspektivdarstellung eines dritten Ausführungsbeispiels eines Kettenstranges mit Gleitschutzelementen für die erfindungsgemäße Reifenkette;
- Fig. 5: eine schematische Draufsicht auf ein Gleitschutzelement der Fig. 4;
- Fig. 6: eine schematische Darstellung eines weiteren Ausführungsbeispiels eines Gleitschutzelements für die erfindungsgemäße Reifenkette;
- Fig. 7: eine schematische Darstellung eines weiteren Ausführungsbeispiels eines Gleitschutzelements für die erfindungsgemäße Reifenkette;
- Fig. 8: eine schematische Perspektivdarstellung eines weiteren Ausführungsbeispiels eines Kettenstranges mit Gleitschutzelementen für die erfindungsgemäße Reifenkette;
- Fig. 9: eine schematische Draufsicht auf ein Gleitschutzelement der Fig. 8.

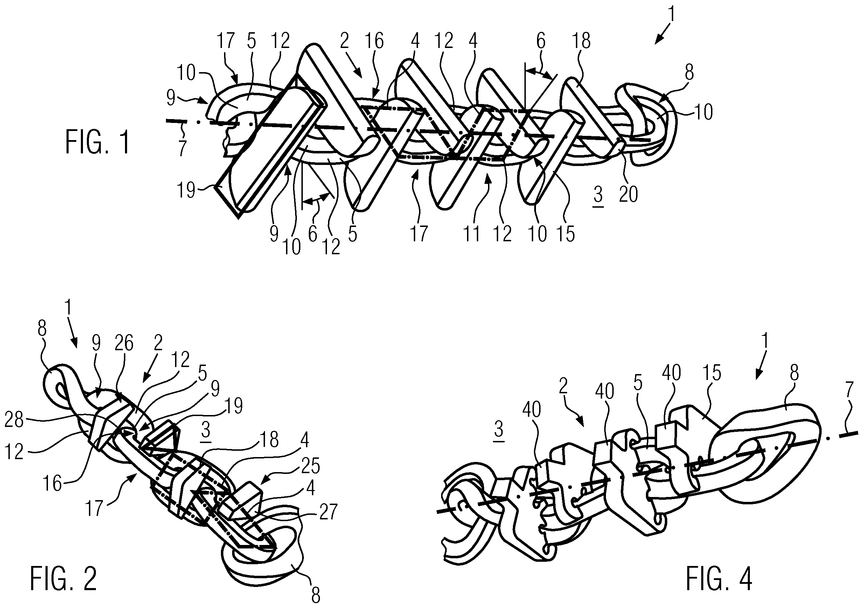

Zunächst werden Aufbau und Funktion einer erfindungsgemäßen Reifenkette 1 anhand der Fig. 1 erläutert.

Fig. 1 zeigt ein Ausführungsbeispiel eines Kettenstranges 2 der Reifenkette 1, der X- bzw. schragenkreuzförmig auf einer Lauffläche 3 eines hier nicht dargestellten Fahrzeugreifens aufliegt.

Die X-förmige Auflage bedeutet, dass die Kettengliedebenen 4 aufeinanderfolgender Kettenglieder 5 in einem spitzen Winkel 6 zur Lauffläche 3 liegen, wobei sich dieser Winkel im Wesentlichen quer zu einer Längsrichtung 7 des Kettenstranges in Richtung zum Kettenstrang 2 hin öffnet. Somit liegt jedes Kettenglied 5 des Kettenstranges 2 auf der Lauffläche 3 auf. Der Winkel 6 beträgt zwischen 35° und 55°, bevorzugt zwischen 45° und 50°.

Die X- oder schragenkreuzförmige Anordnung wird durch wenigstens ein Endglied 8 am Ende des Kettenstranges 2 erreicht, das in sich verdreht ist. Während die Kettenglieder 5 des Kettenstranges 2 im Wesentlichen eben ausgestaltet sind, so dass die in Längsrichtung 7 an den Enden 9 eines Kettengliedes 5 gelegenen Buge 10 und die an den Seiten 11 der Kettenglieder gelegenen Schenkel 12 die Kettengliedebene 4 aufspannen, sind die Buge 10 eines Endgliedes 8 um etwa 35° bis 55°, vorzugsweise um etwa 45° gegeneinander verdreht. Die Verdrehung stellt sicher, dass der Kettenstrang 2 die erforderliche Vororientierung erhält, so dass die Kettengliedebenen 4 aufeinanderfolgender Kettenglieder 5 in Längsrichtung 7 betrachtet schragenkreuzförmig auf der Lauffläche 3 aufliegen.

Eine solche Ausgestaltung eines Kettenstranges ist im deutschen Gebrauchsmuster Nr. 20 2016 101 308.9 beschrieben, dessen Inhalt an dieser Stelle vollumfänglich per Bezugnahme in diesen Text aufgenommen ist.

Wie Fig. 1 zeigt, sind wenigstens einige unmittelbar aufeinanderfolgende Kettenglieder 5 des Kettenstranges 2 mit Gleitschutzelementen 15 versehen. Die Gleitschutzelemente sind an den Schenkeln 12 der Kettenglieder 5 vorzugsweise stoffschlüssig, wie beispielsweise durch Schweißen befestigt. Die Gleitschutzelemente 15 stehen wenigstens an der von der Lauffläche 3 weg weisenden Seite 16 eines jeden Kettengliedes seitlich über das Kettenglied 5 hinaus.

Auch an der zur Lauffläche weisenden Seite 17 eines Kettengliedes 5 können sich die Gleitschutzelemente 15 seitlich jenseits des Kettengliedes 5 erstrecken, so dass bei montierter Reifenkette 1 sich das Gleitschutzelement 15 an seiner zur Lauffläche 3 weisenden Seite 17 auf der Lauffläche 3 abstützt. Dies ergibt auf der Lauffläche 3 einen größere Auflagefläche des Kettenstranges 2, der sowohl auf den Kettengliedern 5 also auch auf den Gleitschutzelementen 15 aufliegt. Der Reifen unterliegt dadurch einem geringeren Verschleiß.

Die Gleitschutzelemente 15 in der Ausgestaltung gemäß Fig. 1 weisen eine zur Kettengliedebene 4 des jeweiligen Kettengliedes 5, auf dem sie befestigt sind, parallele Traktionskante 18 auf, die abgerundet, beispielsweise ballig geformt sein kann. Die dem jeweiligen Kettenglied 5 zugewandte Seite kann gebogen sein. Die Gleitschutzelemente 15 sind plättchen- bzw. scheibenförmig, wobei ihre Ebene 19 quer zur Kettengliedebene 4 des jeweiligen Kettengliedes verläuft.

Die Gleitschutzelemente 15 sind am jeweiligen Kettenglied 5 zwischen den beiden benachbarten Kettengliedern angebracht.

Die Gleitschutzelemente 15 können aus einem Blechmaterial geschnittene oder gestanzte Teile oder gesenkgeschmiedete Teile sein.

Der von der Lauffläche 3 am weitesten beabstandete Teil eines montierten Kettenstranges 2 wird bei der Ausgestaltung der Fig. 1 von Ecken 20 der Gleitschutzelemente 15 gebildet, so dass die Gleitschutzelemente 15 trotz der platten- oder plättchenförmigen Ausgestaltung sich wie Stollen mit hoher Flächenpressung in den Untergrund drücken können. Die Ecken 20 bilden ein Ende der Traktionskante 18 und können bei aufeinanderfolgenden Kettenglieder 5 abwechselnd links und rechts außermittig des Kettenstranges 2 oder in Längsrichtung 7 mittig fluchtend angeordnet sein. Die plättchenartige Ausgestaltung erhöht die Traktion aufgrund einer leichten Schaufelwirkung.

Da bei der Ausgestaltung gemäß Fig. 1 jedes einzelne Kettenglied mit einem Gleitschutzelement 15 versehen ist, bietet die Reifenkette 1 ein größeres Verschleißvolumen und somit längere Standzeiten im Vergleich zu einem herkömmlichen Kettenstrang mit stehenden und liegenden Kettengliedern. Durch den gleichmäßigeren und hochfrequenteren Eingriff der Gleitschutzelemente 15 in den Untergrund bei rollender Reifenkette verbessern sich zudem die Fahreigenschaften.

Anstelle oder zusätzlich zu der in Fig. 1 dargestellten Verschweißung der Gleitschutzelemente 15 mit den jeweiligen Kettengliedern 5 können die Gleitschutzelemente 15 auch durch das sie haltende Kettenglied 5 durchgesteckt und/oder um das Kettenglied 5 herum verformt werden, um sie gegen Herausfallen oder Verrutschen zu sichern. Außerdem können unterschiedliche Formen von Gleitschutzelementen 15 an einem Kettenstrang 2 oder in einer Reifenkette 1 verwendet werden.

Dies ist nachstehend mit Bezug auf die Figuren 2 bis 7 erläutert, in denen weitere Ausführungsbeispiele der Gleitschutzelemente 15 gezeigt sind. Die einzelnen Elemente der unterschiedlichen Ausführungsbeispiele können beliebig miteinander kombiniert werden. Eine Reifenkette 1 bzw. ein Kettenstrang 2 kann mit unterschiedlichen Gleitschutzelementen 15 versehen sein.

Die Gleitschutzelemente 15 der Fig. 2 sind im Unterschied zu den Gleitschutzelementen 15 der Fig. 1 auf der von der Lauffläche 3 weg weisenden Seite 16 als Polygon 25, insbesondere als Dreieck 27 ausgestaltet, wobei die Ebene 19 der Polygone 25 quer zur Längsrichtung 7 des Kettenstranges 2 und quer zur Kettengliedebene des jeweiligen Kettengliedes 5 verläuft. Der Traktionsabschnitt 26 eines Polygons 25, mit dem das Gleitschutzelement 15 auf dem Untergrund abrollte, wird von der weg von der Lauffläche 3 weisenden Traktionskante 18 des Polygons gebildet. Die Traktionskante 18 verläuft bei montierter Reifenkette 1 bevorzugt nahezu parallel zur Lauffläche 3.

Die Dreiecke 27 sind bevorzugt gleichschenklig mit einem Basiswinkel zwischen etwa 35° und etwa 55°, vorzugsweise etwa 45°. Die Dreiecke 27 sind mit ihrer Basis 28 einfach auf das jeweilige Kettenglied 5 geschweißt.

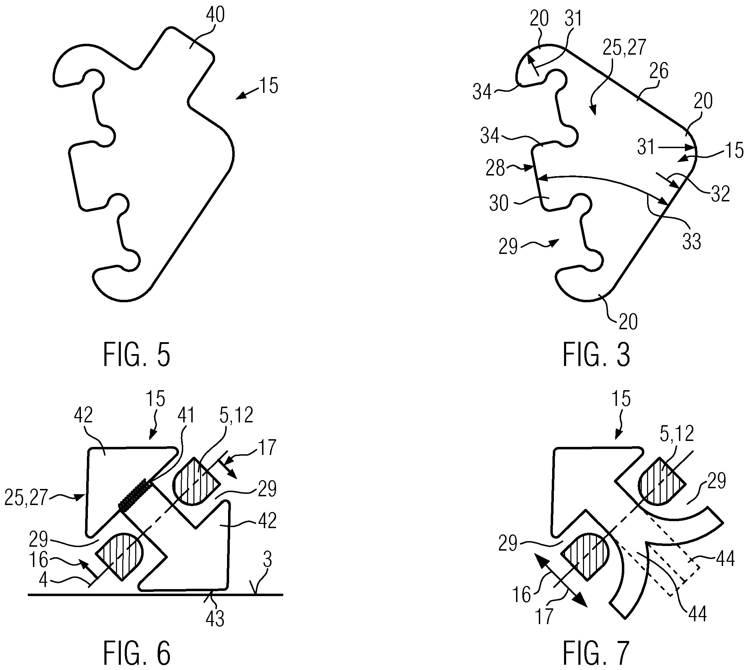

Fig. 3 zeigt ein weiteres Beispiel eines Gleitschutzelements 15.

Das Gleitschutzelement 15 weist die Form eines gleichschenkligen Dreiecks 27 auf, wobei die Basis 28 des Dreiecks 27 mit dem Kettenglied 5 (Fig. 2) verbunden ist. Das Gleitschutzelement 15 weist an seiner Basis wenigstens eine Aufnahme 29 auf, in der die Schenkel 12 des Kettengliedes vorzugsweise in einer Presspassung aufgenommen werden. Wie Fig. 3 zeigt, kann für jeden Schenkel 12 des Kettengliedes eine separate Aufnahme 29 vorgesehen sein, so dass ein zwischen den beiden Aufnahmen liegender Vorsprung 30 zwischen die beiden Schenkel 12 ragt.

Die Ecken 20 des Polygons 25 bzw. Dreiecks 27 können abgerundet sein. Der Rundungsradius 31 der Ecken 20 ist bevorzugt größer als ein Rundungsradius 32 der Kanten.

Damit die Traktionskante 18 des Traktionsabschnitts 26 in etwa parallel zur Lauffläche 3 und damit bei montierter Reifenkette 1 parallel zum Untergrund ausgerichtet ist, beträgt der Winkel 33 zwischen der Kante 26 und der Basis 28 zwischen 35° und 55°, bevorzugt etwa 45°.

Die Aufnahme 29 für die Schenkel 12 (Fig. 2) öffnet sich quer zur Kettengliedebene 4, so dass die Gleitschutzelemente 15 quer zur Kettengliedebene 4 auf die Schenkel 12 gesteckt werden können. Die Aufnahmen 29 können mit Rastvorsprüngen 34 versehen sein, so dass die Gleitschutzelemente 15 formschlüssig auf den Kettengliedern gehalten werden.

Fig. 4 zeigt einen Kettenstrang 2 mit einer weiteren Variante von Gleitschutzelementen 15, die auf der in Fig. 3 dargestellten Ausgestaltung basieren und in Fig. 5 im Detail dargestellt sind. Die Gleitschutzelemente 15 sind mit wenigstens einem Stollen 40 versehen, der sich von dem Traktionsabschnitt 26 bzw. der Traktionskante 18 des Gleitschutzelements 15 von der Lauffläche 3 weg erstreckt. Insbesondere kann ein Stollen 40 mittig auf der Kante 26 sitzen. Der Stollen 40 kann monolithisch mit dem Gleitschutzelement 15 ausgeformt oder nachträglich am Gleitschutzelement 15 angebracht sein, wie Fig. 5 zeigt.

Bei montierter Reifenkette 1 liegen die Stollen 40 in Längsrichtung 7 des Kettenstranges nahezu ausgerichtet hintereinander.

Das Gleitschutzelement 15 kann sich in weiteren Ausgestaltungen durch das Kettenglied 5 hindurch erstrecken und Aufnahmen 29 bilden, die sich parallel zur Kettengliedebene 4 öffnen. Dadurch hintergreift das Gleitschutzelement 15 die Schenkel 12 und ist, sofern es nicht zusätzlich auf dem Kettenglied 5 verschweißt ist, bereits formschlüssig ausreichend gegen Abfallen gesichert. Eine solche durchgesteckte, formschlüssig gesicherte Ausgestaltung bietet sich an, wenn für das Gleitschutzelement Materialien verwendet werden, die nicht mit dem Kettenglied 5 verschweißt werden können, wie beispielsweise Gleitschutzelemente aus Hartgummi oder Kunststoffen. Außerdem verhindert eine Beweglichkeit des Gleitschutzelements 15 gegenüber dem jeweiligen Kettenglied 5 Beschädigungen, weil das Gleitschutzelement 15 bei starker Belastung Ausweichbewegungen ausführen kann.

Wie Fig. 6 zeigt, kann das Gleitschutzelement 15 auch mehrteilig, insbesondere zweiteilig ausgestaltet sein. Die Verbindungsstelle 41 zwischen den beiden Teilen 42 des Gleitschutzelements 5 liegt im Bereich der Aufnahmen 29, so dass zum Anbringen des Gleitschutzelements am Kettenglied 5 zunächst das eine Teil 42 durch das Kettenglied 5 gesteckt wird und dann mit dem anderen Teil 42 verbunden, beispielsweise verschweißt wird. Auf der von der Lauffläche 3 weg weisenden Seite 16 kann ein solches Gleitschutzelement 15 wieder in Form eines Polygons 25, insbesondere eines Dreiecks 27, ausgebildet sein. Es bietet sich an, auch auf der der Lauffläche zugewandten Seite 17 eine Dreiecksform zu wählen, so dass eine Auflagekante 43 entsteht, auf der sich das Gleitschutzelement 15 bei montierter Reifenkette 1 auf der Lauffläche 3 großflächig abstützen kann.

Wie Fig. 7 zeigt, kann ein durch ein Kettenglied 5 durchgestecktes Gleitschutzelement 15 auch durch plastische Verformung am Kettenglied 5 gesichert werden. Hierbei wird wenigstens ein Biegeabschnitt 44 auf der zur Lauffläche 3 weisenden Seite 17 des Gleitschutzelements 15 um den jeweiligen Schenkel 12 gebogen, so dass wieder eine sich parallel zur Kettengliedebene 4 öffnende Aufnahme 29 entsteht. Zum Einstecken des Gleitschutzelements 15 in das Kettenglied 5 sind die Biegeabschnitte 44 im Wesentlichen parallel zueinander ausgerichtet.

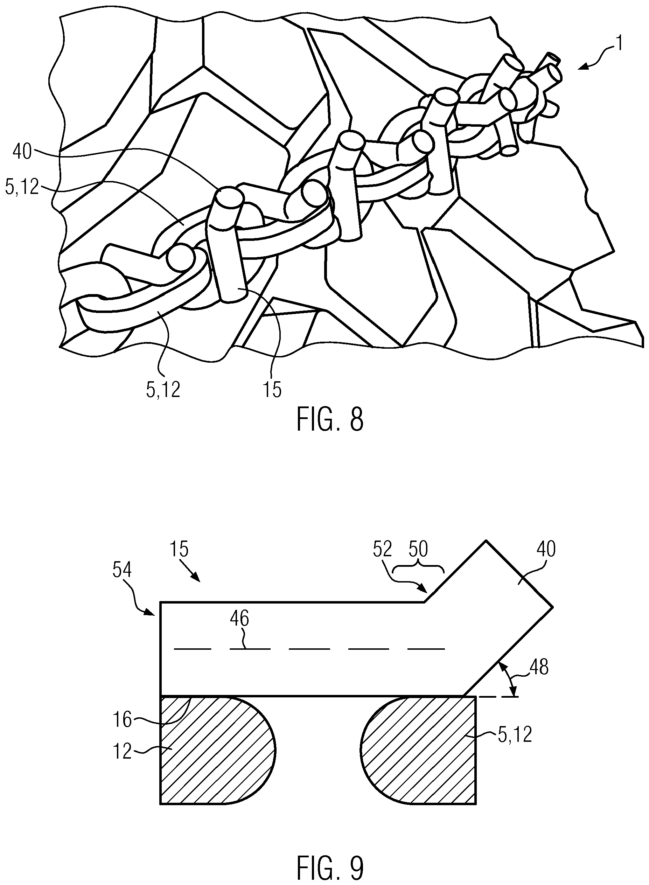

Die Fig. 8 und 9 zeigen eine weitere vorteilhafte Ausführungsform einer erfindungsgemäßen Reifenkette 1 mit einem Gleitschutzelement 15. Der Kürze halber ist nur auf die Unterschiede zu den vorher beschriebenen Ausführungsformen eingegangen.

Die Gleitschutzelemente 15 weisen jeweils einen Stollen 40 auf, wie beispielsweise bei der mit Bezug auf die Fig. 5 beschriebenen Ausführungsform. Jedoch ist hier auf die Dreiecksform verzichtet. Die Gleitschutzelemente 15 weisen insgesamt eine Stabform auf, wobei eine Längsrichtung 46 der Stabform quer zu den Schenkeln 12 des jeweiligen Kettengliedes 5 verläuft.

Das Gleitschutzelement liegt an der von der Lauffläche weg weisenden Seite 16 des Kettengliedes 5 an. Bevorzugt ist das Gleitschutzelement 15 stoffschlüssig, beispielsweise durch Schweißen, mit dem Kettenglied 5 verbunden.

Der Stollen 40 kann durch Abbiegen oder Abknicken eines Abschnittes des Gleitschutzelements 5 gebildet sein.

Bevorzugt ragt der Stollen 40 in Längsrichtung 46 über die Schenkel 12 des Kettengliedes 5 hinaus. Er erstreckt sich nach oben von dem Kettenglied 5 weg. Bevorzugt erstreckt sich der Stollen 40 dabei in einem Winkel 48 zur Längsrichtung 46, der zwischen 30° und 60° beträgt.

Bevorzugt ist das Gleitschutzelement 15 im Bereich 50, in dem sich der Knick 52 oder eine Biegung in Längsrichtung 46 erstreckt, mit einem Schenkel 12 des Kettengliedes 5 verbunden.

Am dem dem Stollen 40 gegenüberliegenden Ende 54 des Gleitschutzelements 15 schließt das Gleitschutzelement 15 in Längsrichtung 46 bevorzugt bündig mit dem auf dieser Seite befindlichen Schenkel 12 des Kettengliedes 5 ab. Das Gleitschutzelement 15 kann aber auch über den Schenkel 12 überstehen oder alternativ dazu nicht ganz bis zu dessen Ende in Längsrichtung 46 heranreichen.

Bevorzugt weist das Gleitschutzelement 15 quer zur Längsrichtung 46 einen kreisrunden Querschnitt auf. Es sind jedoch auch andere Querschnitte, beispielsweise polygonale, möglich.

Bei einer Reifenkette 1, deren Kettenglieder 5 mit den stabförmigen Gleitschutzelementen 15 versehen sind, ist die Ausrichtung der Stollen 40 bevorzugt alternierend angeordnet, d.h. bei zwei aufeinanderfolgenden Kettengliedern 5 weist der Stollen 40 jeweils in die entgegengesetzte Richtung.

### Bezugszeichen

- 1: Reifenkette
- 2: Kettenstrang
- 3: Lauffläche
- 4: Kettengliedebene
- 5: Kettenglied
- 6: spitzer Winkel
- 7: Längsrichtung des Kettenstranges
- 8: Endglied
- 9: Enden eines Kettengliedes
- 10: Buge eines Kettengliedes
- 11: Seiten eines Kettengliedes
- 12: Schenkel eines Kettengliedes
- 15: Gleitschutzelement
- 16: von der Lauffläche weg weisende Seite des Kettengliedes
- 17: zur Lauffläche weisende Seite eines Kettengliedes
- 18: Traktionskante
- 19: Ebene eines Gleitschutzelements
- 20: Ecke eines Gleitschutzelements
- 25: Polygon
- 26: Traktionsabschnitt
- 27: Dreieck
- 28: Basis des Gleitschutzelements
- 29: Aufnahme
- 30: Vorsprung
- 31: Rundungsradius der Ecken
- 32: Rundungsradius der Kanten
- 33: Winkel zwischen Traktionskante und Basis
- 34: Rastvorsprung
- 40: Stollen
- 41: Verbindungsstelle zwischen Teilen eines Gleitschutzelements
- 42: Teil eines Gleitschutzelements
- 43: Auflagekante eines Gleitschutzelements
- 44: Biegeabschnitt eines Gleitschutzelements
- 46: Längsrichtung der Stabform
- 48: Winkel
- 50: Knickbereich
- 52: Knick
- 54: dem Stollen gegenüberliegendes Ende

## Patentansprüche

1. Reifenkette (1) für einen Fahrzeugreifen, mit wenigstens einem Kettenstrang (2) aus wenigstens zwei ineinandergefügten, ebenen Kettengliedern (5), die jeweils eine Kettengliedebene (4) aufspannen, wobei die Kettengliedebenen (4) unmittelbar aufeinanderfolgender Kettenglieder (5) bei auf dem Fahrzeugreifen montierter Reifenkette (1) schragenkreuzförmig zu einer Lauffläche (3) des Fahrzeugreifens ausgerichtet sind, **dadurch gekennzeichnet, dass** unmittelbar aufeinanderfolgende Kettenglieder (5) des Kettenstranges (2) jeweils mit wenigstens einem Gleitschutzelement (15) versehen sind und dass das wenigstens eine Gleitschutzelement (15) mit beiden Schenkeln (12) eines Kettenglieds (5) verbunden ist.

2. Reifenkette (1) nach Anspruch 1, **dadurch gekennzeichnet, dass** die Gleitschutzelemente (15) unmittelbar aufeinanderfolgender Kettenglieder (5) identisch zueinander ausgestaltet sind.

3. Reifenkette (1) nach Anspruch 1 oder 2, **dadurch gekennzeichnet, dass** die Gleitschutzelemente (15) jeweils eine Basis (28) aufweisen, die an dem jeweiligen Kettenglied (5) anliegt und/oder mit diesem stoffschlüssig verbunden ist, und dass die Gleitschutzelemente (15) bei montierter Reifenkette (1) auf der von der Lauffläche (3) weg weisenden Seite (16) mit einer Traktionskante (26) versehen sind, die in einem Winkel (33) zwischen etwa 35° und etwa 55° zur Basis (28) verläuft.

4. Reifenkette (1) nach Anspruch 3, **dadurch gekennzeichnet, dass** der Traktionsabschnitt (26) bei montierter Reifenkette (1) der am weitesten von der Lauffläche (3) beabstandete Teil des Kettenstranges (2) ist.

5. Reifenkette (1) nach Anspruch 3 oder 4, **dadurch gekennzeichnet, dass** bei montierter Reifenkette der Traktionsabschnitt (26) etwa parallel zur Lauffläche verläuft.

6. Reifenkette (1) nach einem der Ansprüche 1 bis 5, **dadurch gekennzeichnet, dass** das Gleitschutzelement (15) bei montierter Reifenkette (1) auf der von der Lauffläche (3) abgewandten Seite (16) des jeweiligen Kettengliedes (5) eine Polygonform aufweist.

7. Reifenkette (1) nach Anspruch 6, **dadurch gekennzeichnet, dass** das Gleitschutzelement (15) auf der von der Lauffläche (3) abgewandten Seite (16) des jeweiligen Kettenglieds (5) dreiecksförmig ist.

8. Reifenkette (1) nach einem der Ansprüche 1 bis 7, wobei das Gleitschutzelement (15) wenigstens eine Aufnahme (29) aufweist, in die wenigstens ein Schenkel (12) des Kettengliedes (5) eingesetzt ist.

9. Reifenkette (1) nach einem der Ansprüche 1 bis 8, **dadurch gekennzeichnet, dass** das Gleitschutzelement (15) aus wenigstens zwei Teilen (42) zusammengefügt ist.

10. Reifenkette (1) nach Anspruch 9, **dadurch gekennzeichnet, dass** die beiden Teile (42) im Bereich der Aufnahme (29) zusammengefügt sind.

11. Reifenkette (1) nach einem der Ansprüche 1 bis 10, **dadurch gekennzeichnet, dass** das Gleitschutzelement (15) auf der von der Lauffläche (3) abgewandten Seite (16) mit wenigstens einem Stollen (40) versehen ist.

12. Reifenkette (1) nach einem der Ansprüche 1 bis 11, **dadurch gekennzeichnet, dass** das Gleitschutzelement (15) durch das Kettenglied (5) hindurch reicht.

13. Reifenkette (1) nach einem der Ansprüche 1 bis 12, **dadurch gekennzeichnet, dass** das Gleitschutzelement (15) auf der der Lauffläche (3) zugewandten Seite (17) des Kettengliedes (5) zur Lauffläche (3) hin über das Kettenglied (5) übersteht.

14. Reifenkette (1) nach einem der Ansprüche 1 bis 13, **dadurch gekennzeichnet, dass** das Gleitschutzelement (15) auf der zur Lauffläche (3) hin gerichteten Seite (16) des Kettenglieds (5) polygonal ausgestaltet ist.

15. Reifenkette (1) nach einem der Ansprüche 1 bis 14, **dadurch gekennzeichnet, dass** das Gleitschutzelement (15) das Kettenglied (5) durchdringt und um wenigstens einen Schenkel des Kettenglieds (5) gebogen ist.

## Claims

1. Tyre chain (1) for a vehicle tyre, comprising at least one chain strand (2) made of at least two coupled, planar chain links (5) which span a chain link plane (4) in each case, the chain link planes (4) of directly consecutive chain links (5) being oriented in the manner of a saltire relative to a tread (3) of the vehicle tyre when the tyre chain (1) is mounted on the vehicle tyres, **characterised in that** directly consecutive chain links (5) of the chain strand (2) are provided in each case with at least one anti-skid element (15) and **in that** the at least one anti-skid element (15) is connected to both legs (12) of a chain link (5).

2. Tyre chain (1) according to claim 1, **characterised in that** the anti-skid elements (15) of directly consecutive chain links (5) are designed so as to be identical.

3. Tyre chain (1) according to either claim 1 or claim 2, **characterised in that** the anti-skid elements (15) each have a base (28) which abuts the relevant chain link (5) and/or is bonded thereto, and **in that**, when the tyre chain (1) is mounted, the anti-skid elements (15) are provided, on the side (16) pointing away from the tread (3), with a traction edge (26) which extends at an angle (33) of between approximately 35° and approximately 55° relative to the base (28).

4. Tyre chain (1) according to claim 3, **characterised in that**, when the tyre chain (1) is mounted, the traction portion (26) is the part of the chain strand (2) that is spaced furthest apart from the tread (3).

5. Tyre chain (1) according to either claim 3 or claim 4, **characterised in that**, when the tyre chain is mounted, the traction portion (26) extends approximately in parallel with the tread.

6. Tyre chain (1) according to any of claims 1 to 5, **characterised in that**, when the tyre chain (1) is mounted, the anti-skid element (15) is polygonal on the side (16) of the relevant chain link (5) remote from the tread (3).

7. Tyre chain (1) according to claim 6, **characterised in that** the anti-skid element (15) is triangular on the side (16) of the relevant chain link (5) remote from the tread (3).

8. Tyre chain (1) according to any of claims 1 to 7, wherein the anti-skid element (15) comprises at least one recess (29), in which at least one leg (12) of the chain link (5) is inserted.

9. Tyre chain (1) according to any of claims 1 to 8, **characterised in that** the anti-skid element (15) is assembled from at least two parts (42).

10. Tyre chain (1) according to claim 9, **characterised in that** the two parts (42) are joined together in the region of the recess (29).

11. Tyre chain (1) according to any of claims 1 to 10, **characterised in that** the anti-skid element (15) is provided, on the side (16) remote from the tread (3), with at least one stud (40).

12. Tyre chain (1) according to any of claims 1 to 11, **characterised in that** the anti-skid element (15) extends through the chain link (5).

13. Tyre chain (1) according to any of claims 1 to 12, **characterised in that** the anti-skid element (15) projects beyond the chain link (5), towards the tread (3), on the side (17) of the chain link (5) facing the tread (3).

14. Tyre chain (1) according to any of claims 1 to 13, **characterised in that** the anti-skid element (15) is designed so as to be polygonal on the side (16) of the chain link (5) pointing towards the tread (3).

15. Tyre chain (1) according to any of claims 1 to 14, **characterised in that** the anti-skid element (15) passes through the chain link (5) and is bent around at least one leg of the chain link (5).

## Revendications

1. Chaine à pneumatique (1) pour un pneumatique de véhicule, comprenant au moins un brin de chaine (2) constitué d'au moins deux maillons de chaine plats (5), insérés l'un dans l'autre et définissant respectivement un plan de maillon de chaine (4), les plans de maillons de chaine (4) de maillons de chaine (5) se succédant directement étant orientés selon une croix oblique ou en X par rapport à une bande de roulement (3) du pneumatique de véhicule lorsque la chaine à pneumatique (1) est montée sur le pneumatique de véhicule, **caractérisée en ce que** des maillons de chaine (5) se succédant directement, du brin de chaine (2), sont pourvus respectivement d'au moins un élément antidérapant (15), et **en ce que** ledit au moins un élément antidérapant (15) est relié aux deux branches (12) d'un maillon de chaine (5).

2. Chaine à pneumatique (1) selon la revendication 1, **caractérisée en ce que** les éléments antidérapants (15) de maillons de chaine (5) se succédant directement, sont de configuration identique les uns par rapport aux autres.

3. Chaine à pneumatique (1) selon la revendication 1 ou la revendication 2, **caractérisée en ce que** les éléments antidérapants (15) présentent chacun une base (28), qui s'appuie sur le maillon de chaine (5) respectivement considéré et/ou est reliée à celui-ci par continuité de matière, et **en ce que** les éléments antidérapants (15) sont pourvus, sur le côté (16) opposé à celui dirigé vers la bande de roulement (3) lorsque la chaine à pneumatique (1) est montée, un bord de traction (26), qui s'étend sous un angle (33) compris entre environ 35° et environ 55° par rapport à la base (28).

4. Chaine à pneumatique (1) selon la revendication 3, **caractérisée en ce que** le tronçon de traction (26) est, lorsque la chaine à pneumatique (1) est montée, la partie la plus éloignée de la bande de roulement (3) du brin de chaine (2).

5. Chaine à pneumatique (1) selon la revendication 3 ou la revendication 4, **caractérisée en ce que** lorsque la chaine à pneumatique est montée, le tronçon de traction (26) s'étend environ parallèlement à la bande de roulement.

6. Chaine à pneumatique (1) selon l'une des revendications 1 à 5, **caractérisée en ce que** l'élément antidérapant (15), lorsque la chaine à pneumatique (1) est montée, présente une forme polygonale sur le côté (16) du maillon de chaine (5) respectivement considéré, qui est opposé à celui dirigé vers la bande de roulement (3) .

7. Chaine à pneumatique (1) selon la revendication 6, **caractérisée en ce que** l'élément antidérapant (15) est de forme triangulaire sur le côté (16) du maillon de chaine (5) respectivement considéré, qui est opposé à celui dirigé vers la bande de roulement (3).

8. Chaine à pneumatique (1) selon l'une des revendications 1 à 7, **caractérisée en ce que** l'élément antidérapant (15) présente au moins un emplacement d'accueil (29) dans lequel est inséré au moins une branche (12) du maillon de chaine (5).

9. Chaine à pneumatique (1) selon l'une des revendications 1 à 8, **caractérisée en ce que** l'élément antidérapant (15) est formé par l'assemblage d'au moins deux parties (42).

10. Chaine à pneumatique (1) selon la revendication 9, **caractérisée en ce que** lesdites deux parties (42) sont assemblées dans la zone de l'emplacement d'accueil (29).

11. Chaine à pneumatique (1) selon l'une des revendications 1 à 10, **caractérisée en ce que** l'élément antidérapant (15) est pourvu sur le côté (16), qui est opposé à celui dirigé vers la bande de roulement (3), d'au moins un crampon (40).

12. Chaine à pneumatique (1) selon l'une des revendications 1 à 11, **caractérisée en ce que** l'élément antidérapant (15) s'étend à travers le maillon de chaine (5).

13. Chaine à pneumatique (1) selon l'une des revendications 1 à 12, **caractérisée en ce que** sur le côté (17) du maillon de chaine (5), qui est dirigé vers la bande de roulement (3), l'élément antidérapant (15) dépasse du maillon de chaine (5) en direction de la bande de roulement (3).

14. Chaine à pneumatique (1) selon l'une des revendications 1 à 13, **caractérisée en ce que** l'élément antidérapant (15) est d'une configuration polygonale sur le côté (17) du maillon de chaine (5), qui est dirigé vers la bande de roulement (3).

15. Chaine à pneumatique (1) selon l'une des revendications 1 à 14, **caractérisée en ce que** l'élément antidérapant (15) traverse le maillon de chaine (5) et est replié autour d'au moins une branche du maillon de chaine (5).
